# EUROPEAN PATENT APPLICATION

(11) **EP 4 733 617 A1**
(43) Date of publication of application: **29.04.2026**
(21) Application number: 25205362.4
(22) Date of filing: 29.09.2025
(51) Int. Cl.: F16D 7/02, F16F 15/129, F16D 3/14

(54) **TORQUE FLUCTUATION ABSORBING APPARATUS**

(30) Priority: 23.10.2024 JP 2024186478
(71) Applicant: AISIN CORPORATION, Aichi 448-8650 (JP)
(72) Inventor: Ukei, Tsuneo, Kariya, 448-8650 (JP); Kobayashi, Masahiko, Kariya, 448-8650 (JP)
(74) Representative: Kramer Barske Schmidtchen Patentanwälte PartG mbB

(57) **Abstract**

A torque fluctuation absorbing apparatus (1) includes a cover plate (10) that has an annular shape and is fastened to an inertia ring connected to a first rotating shaft, a support plate (20) that has an annular shape and is fastened to the cover plate (10), an inter-plate fastening member (30) that is used to fasten the cover plate (10) and the support plate (20), a damper portion (2) that is connected to a second rotating shaft, and a torque limiter portion (3) that sandwiches a member extending from the damper portion (2) between the cover plate (10) and the support plate (20) via a sliding member (60) and a biasing member, and allows slippage when a torque fluctuation between the first rotating shaft and the second rotating shaft reaches a predetermined value, the cover plate (10) includes a plurality of recesses (11) discretely arranged in a circumferential direction, each of which having a predetermined depth (D) on a first direction side in an axial direction and including an inertia ring fastening portion (11a) that is a fastening portion for fastening to the inertia ring, and a support plate fastening portion (11c) that is a fastening portion for fastening to the support plate (20) between the recesses (11) in the circumferential direction, the support plate (20) includes an extending portion (21, 21a, 21b) that extends radially outward from an outer circumference of a main body portion (20a) with an annular shape, is disposed between the recesses (11) in the circumferential direction, and includes a cover plate fastening portion (21c) that is a fastening portion for fastening to the cover plate (10), in a plurality of the recesses (11), positions of end surfaces (P1) on the first direction side in the axial direction are the same, and in a state where the end surfaces (P1) on the first direction side in the axial direction are in contact with the inertia ring, the inertia ring is fastened to the cover plate (10) by a fastening member at the inertia ring fastening portion (11a), and the cover plate (10) and the support plate (20) are fastened by the inter-plate fastening member (30) at the support plate fastening portion (11c) and the cover plate fastening portion (21c).

## Description

### TECHNICAL FIELD

The present disclosure relates to a torque fluctuation absorbing apparatus.

### BACKGROUND DISCUSSION

Conventionally, a torque limiter is known in which a member extending from a damper portion in conjunction with a second rotating shaft is sandwiched between a cover plate and a support plate in conjunction with a first rotating shaft via a sliding member to limit torque fluctuations between the first rotating shaft and the second rotating shaft (see, for example, JP 2008-121762 A).

In the conventional technique, it is not easy to use the torque fluctuation absorbing apparatus for a plurality of targets. For example, it is assumed to use the torque fluctuation absorbing apparatus for a plurality of vehicle types. Since the weight and size of a required inertia ring may vary depending on the vehicle type, the diameter of the inertia ring may vary depending on the vehicle type. In a case where the inertia ring with a diameter corresponding to the vehicle type is used, if it is necessary to change many components of the torque fluctuation absorbing apparatus depending on the change in the diameter of the inertia ring, it is difficult to use the torque fluctuation absorbing apparatus for a plurality of vehicle types.

A need thus exists for a torque fluctuation absorbing apparatus that is easily used for a plurality of targets.

### SUMMARY

In order to achieve the above object, a torque fluctuation absorbing apparatus includes a cover plate that has an annular shape and is fastened to an inertia ring connected to a first rotating shaft, a support plate that has an annular shape and is fastened to the cover plate, an inter-plate fastening member that is used to fasten the cover plate and the support plate, a damper portion that is connected to a second rotating shaft, and a torque limiter portion that sandwiches a member extending from the damper portion between the cover plate and the support plate via a sliding member and a biasing member, and allows slippage when a torque fluctuation between the first rotating shaft and the second rotating shaft reaches a predetermined value, the cover plate includes a plurality of recesses discretely arranged in a circumferential direction, each of which having a predetermined depth on a first direction side in an axial direction and including an inertia ring fastening portion that is a fastening portion for fastening to the inertia ring, and a support plate fastening portion that is a fastening portion for fastening to the support plate between the recesses in the circumferential direction, the support plate includes an extending portion that extends radially outward from an outer circumference of a main body portion with an annular shape, is disposed between the recesses in the circumferential direction, and includes a cover plate fastening portion that is a fastening portion for fastening to the cover plate, in a plurality of the recesses, positions of end surfaces on the first direction side in the axial direction are the same, and in a state where the end surfaces on the first direction side in the axial direction are in contact with the inertia ring, the inertia ring is fastened to the cover plate by a fastening member at the inertia ring fastening portion, and the cover plate and the support plate are fastened by the inter-plate fastening member at the support plate fastening portion and the cover plate fastening portion.

That is, the inertia ring is in contact with and fastened to the cover plate at the end surfaces of the plurality of recesses on the first direction side in the axial direction, and the extending portion of the support plate is present between the plurality of recesses in a state where the inertia ring is fastened to the cover plate. Therefore, in a state where the inertia ring is fastened to the cover plate, the extending portion of the support plate and the inertia ring hardly interfere with each other in the axial direction. According to such a configuration, the shapes of the cover plate and the inertia ring can be changed without changing the shape of the support plate. Therefore, it is possible to cope with the design change of the inertia ring only by changing the shape of the cover plate among the components of the torque fluctuation absorbing apparatus, and it is possible to provide the torque fluctuation absorbing apparatus that can be easily used for a plurality of targets.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a diagram illustrating a state where a torque fluctuation absorbing apparatus is viewed from a transaxle side;
Fig. 2 is a diagram illustrating a state where the torque fluctuation absorbing apparatus is viewed from an engine side;
Fig. 3A is a perspective view of the torque fluctuation absorbing apparatus as viewed from the transaxle side, and Fig. 3B is a perspective view of the torque fluctuation absorbing apparatus as viewed from the engine side;
Fig. 4A is a cross-sectional view of the torque fluctuation absorbing apparatus taken along line A-A, and Fig. 4B is a cross-sectional view of the torque fluctuation absorbing apparatus taken along line A-B;
Fig. 5 is a diagram of a cover plate taken out from the torque fluctuation absorbing apparatus and viewed along an axial direction from the transaxle side;
Fig. 6 is a diagram of the cover plate taken out from the torque fluctuation absorbing apparatus and viewed along the axial direction from the engine side;
Fig. 7A is a perspective view of the cover plate as viewed from the transaxle side, and Fig. 7B is a perspective view of a support plate as viewed from the transaxle side;
Fig. 8 is a diagram of the support plate taken out from the torque fluctuation absorbing apparatus and viewed along the axial direction from the transaxle side;
Fig. 9 is a diagram of the support plate taken out from the torque fluctuation absorbing apparatus and viewed along the axial direction from the engine side;
Fig. 10A is an enlarged cross-sectional view of the torque fluctuation absorbing apparatus taken along line A-A, Fig. 10B is a cross-sectional view of the cover plate in a state where fastening to the support plate is released, and Fig. 10C is a perspective view of a pressure plate as viewed from the transaxle side; and
Fig. 11 is a cross-sectional view of the cover plate in a state where fastening to the support plate is released.

### DETAILED DESCRIPTION

Here, embodiments of the present disclosure will be described in the following order.
(1) Configuration of Torque Fluctuation Absorbing Apparatus:
(2) Configuration of Cover Plate:
(3) Configuration of Support Plate:
(4) Other Embodiments:

### Configuration of Torque Fluctuation Absorbing Apparatus:

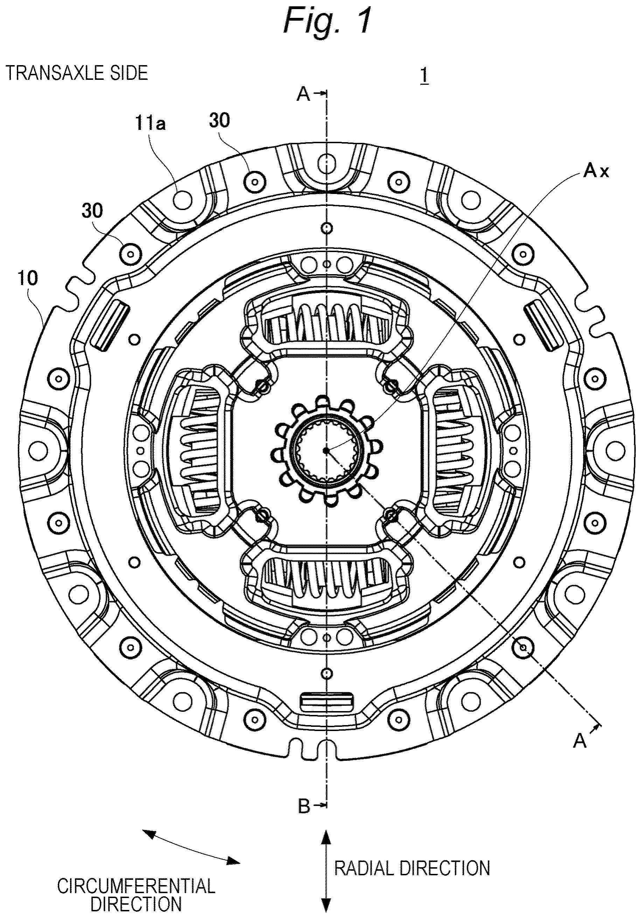

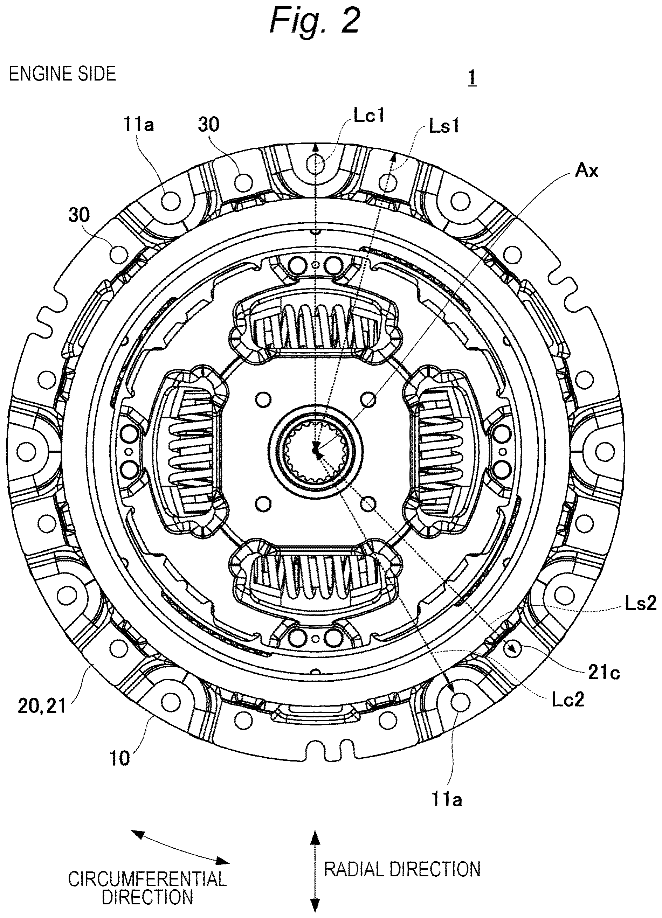

Figs. 1, 2, 3A, 3B, 4A, and 4B are diagrams illustrating a torque fluctuation absorbing apparatus 1 according to an embodiment of the disclosure. The torque fluctuation absorbing apparatus 1 is an apparatus on which torque acts when a first rotating shaft (not illustrated) and a second rotating shaft (not illustrated) rotate, and Figs. 1 and 2 are diagrams illustrating a state where the torque fluctuation absorbing apparatus 1 is viewed from a direction parallel to a rotation axis Ax. In the present embodiment, the first rotating shaft is a rotating shaft in conjunction with the engine of a vehicle, and the second rotating shaft is a rotating shaft in conjunction with the transaxle of the vehicle.

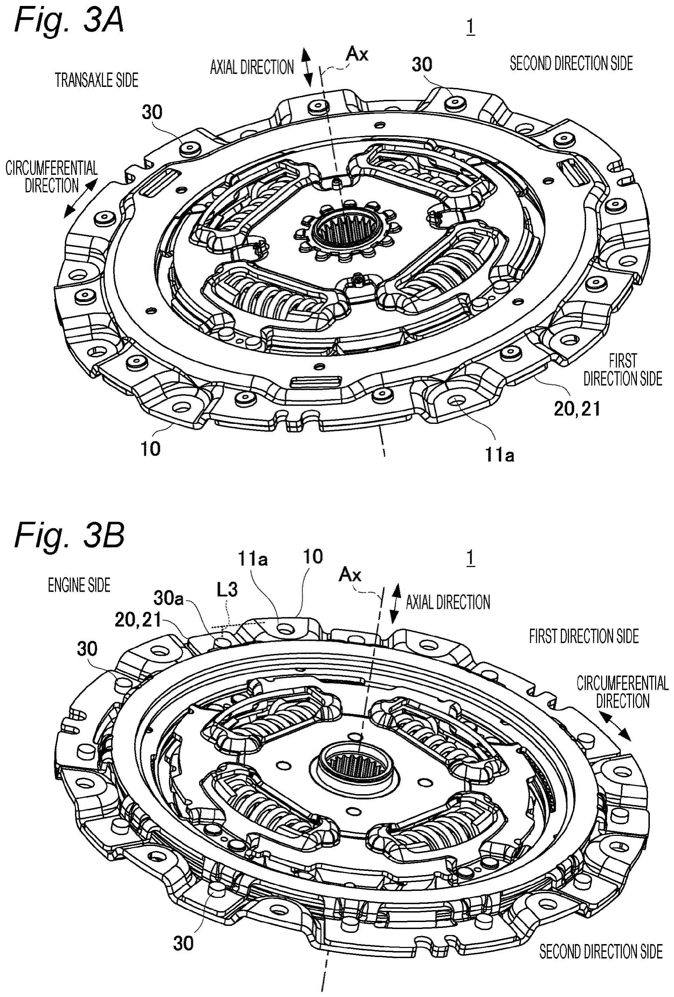

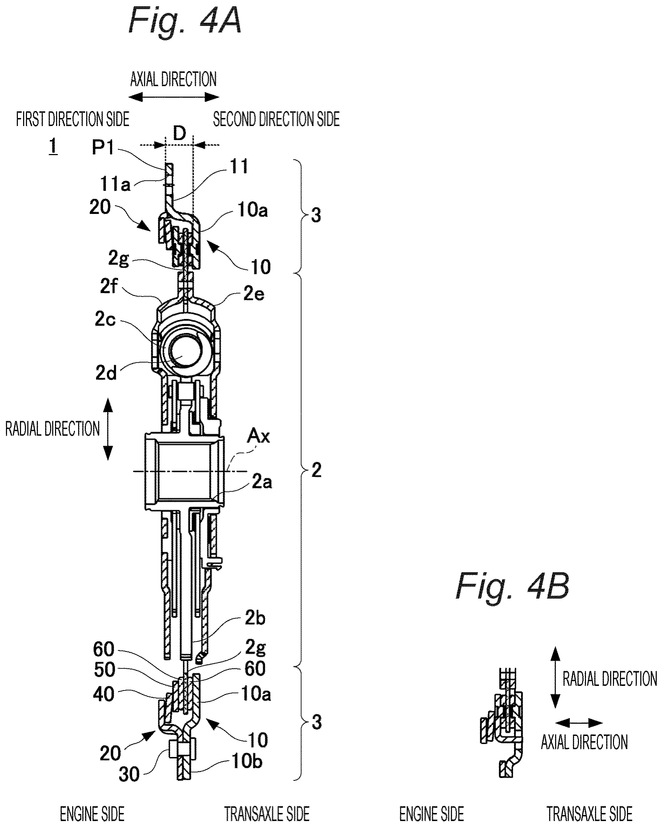

Fig. 1 is a diagram of the torque fluctuation absorbing apparatus 1 as viewed in a direction parallel to the rotation axis Ax from a second rotating shaft side, that is, a transaxle side. Fig. 2 is a diagram of the torque fluctuation absorbing apparatus 1 as viewed in the direction parallel to the rotation axis Ax from a first rotating shaft side, that is, an engine side. Fig. 3A is a perspective view of the torque fluctuation absorbing apparatus 1 as viewed from the transaxle side. Fig. 3B is a perspective view of the torque fluctuation absorbing apparatus 1 as viewed from the engine side. Fig. 4A is a cross-sectional view of the torque fluctuation absorbing apparatus 1 taken along line A-A in Fig. 1, and Fig. 4B is a cross-sectional view of the torque fluctuation absorbing apparatus 1 taken along line A-B in Fig. 1. Note that in the cross-sectional view, hatching is omitted in some members. Fig. 4B illustrates a part of the cross-section.

In the present specification, the direction parallel to the rotation axis Ax is referred to as "axial direction", the direction perpendicular to the rotation axis Ax is referred to as "radial direction", and the rotation direction around the rotation axis Ax is referred to as "circumferential direction". In the radial direction, the direction away from the rotation axis Ax is referred to as "radially outward", and the direction approaching the rotation axis Ax is referred to as "radially inward". Furthermore, in the present embodiment, in a case where it is necessary to distinguish the axial direction, the engine side is distinguished as a first direction side, and the transaxle side is distinguished as a second direction side.

The torque fluctuation absorbing apparatus 1 includes a damper portion 2 and a torque limiter portion 3 (see Fig. 4A), and is an apparatus that absorbs and limits torque transmitted between the first rotating shaft and the second rotating shaft. The damper portion is a device that absorbs torque transmitted between the first rotating shaft and the second rotating shaft, and can be implemented by a known configuration.

In the configuration example illustrated in Fig. 4A, the damper portion 2 includes a hub member 2a coupled to the second rotating shaft, and the second rotating shaft is coupled to the hub member 2a on a radially inner side. The hub member 2a has a flange portion 2b extending radially outward. The flange portion 2b has a window portion for housing a coil spring 2c and an elastic member 2d at a radially intermediate portion of the flange portion 2b. The flange portion 2b is sandwiched between side plates 2e and 2f that rotate integrally with the hub member 2a. The side plates 2e and 2f are fastened to each other on the radially outer side.

An intermediate plate 2g, which is a plate-like annular member, is sandwiched and fixed between the side plates 2e and 2f. In the radial direction, the diameter of the outer circumference of the intermediate plate 2g is larger than the diameters of the outer circumferences of the side plates 2e and 2f. Therefore, the intermediate plate 2g is a member extending outward of the side plates 2e and 2f in the radial direction, and corresponds to a member extending from the damper portion 2.

### (2) Configuration of Cover Plate:

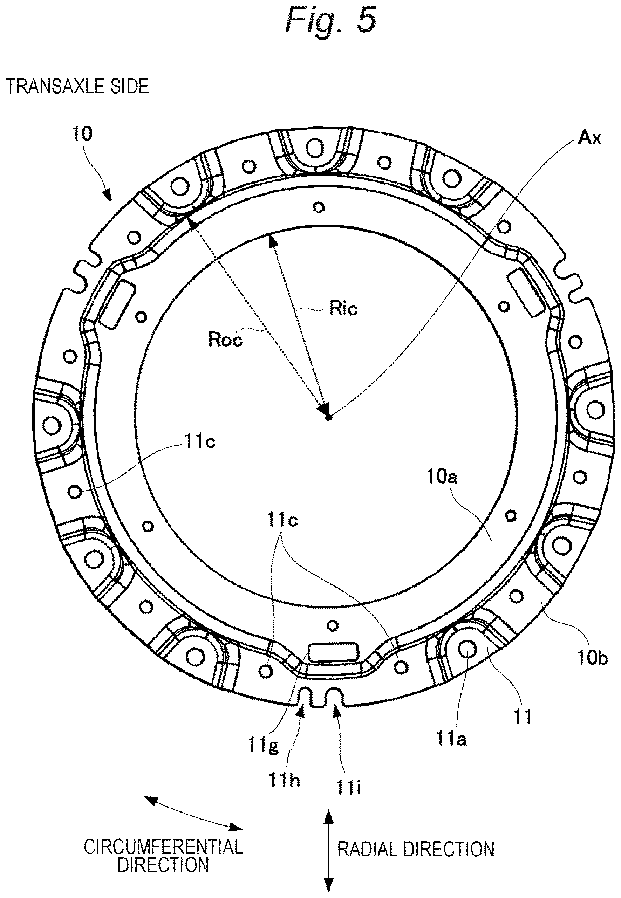

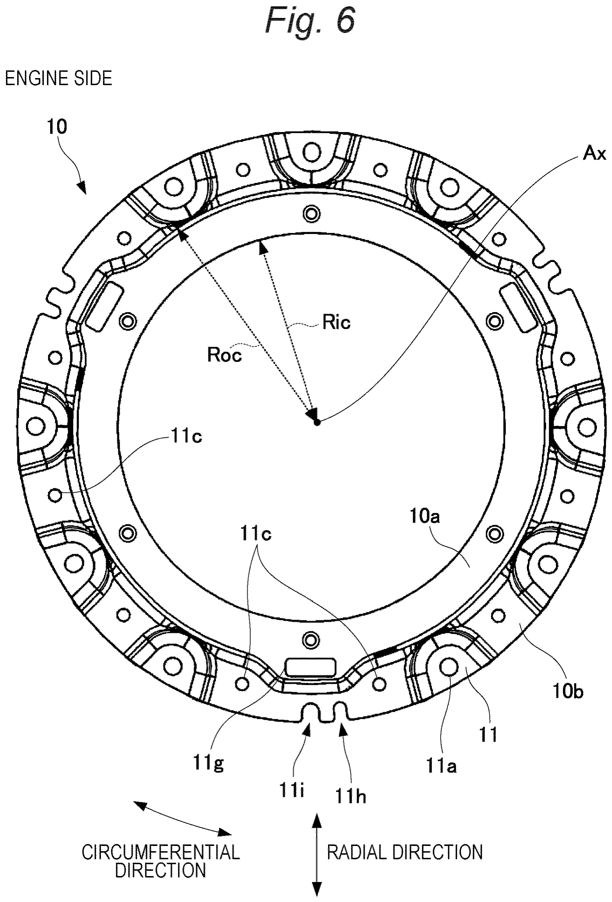

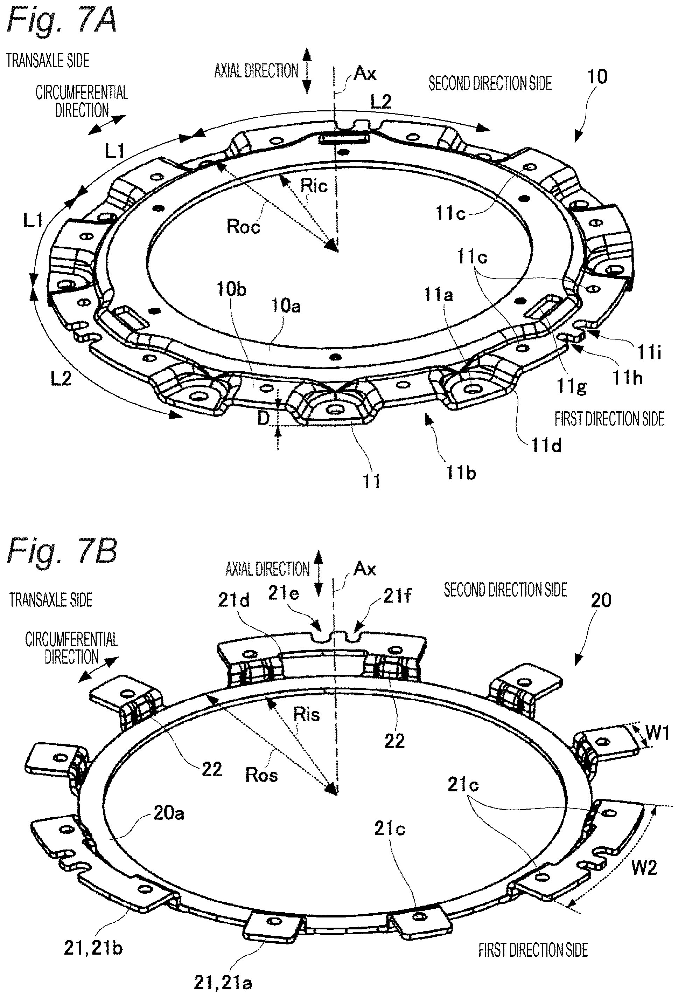

The torque limiter portion 3 according to the present embodiment includes a cover plate 10 and a support plate 20. The cover plate 10 is an annular member fastened to an inertia ring connected to the first rotating shaft. Figs. 5, 6, and 7A are diagrams illustrating the cover plate 10. Fig. 5 is a diagram of the cover plate 10 taken out from the torque fluctuation absorbing apparatus 1 and viewed along the axial direction from the transaxle side. Fig. 6 is a diagram of the cover plate 10 taken out from the torque fluctuation absorbing apparatus 1 and viewed along the axial direction from the engine side. Fig. 7A is a perspective view of the cover plate 10 as viewed from the transaxle side.

The cover plate 10 is a member formed by forming a plate-like member into an annular shape, and the plate thickness direction is directed in the axial direction in most portions of the cover plate 10. The cover plate 10 includes an annular inner circumferential portion 10a formed on the radially inner side and an annular outer circumferential portion 10b formed on the radially outer side of the inner circumferential portion 10a, and the plane to which the outer circumferential portion 10b belongs is at a position shifted to the first direction side in the axial direction from the plane to which the inner circumferential portion 10a belongs. That is, the outer circumferential portion 10b is on the first direction side with respect to the inner circumferential portion 10a.

A plurality of recesses 11 are formed in the outer circumferential portion 10b of the cover plate 10. In the present embodiment, the plurality of recesses 11 are formed so as to be discretely arranged in the outer circumferential portion 10b. The recesses 11 are formed at nine locations on the outer circumferential portion 10b, but the number of the recesses 11 is not limited. In the present embodiment, three recesses 11 form a group. That is, the circumferential distance L1 between the three recesses 11 belonging to the same group is the same, and the circumferential distance L2 between the recesses 11 belonging to another group is the same, and L1 < L2 (see Fig. 7A).

In the present embodiment, the recess 11 is formed in a manner that the width in the circumferential direction increases toward the radially outer side. The recess 11 is formed in a manner that the recess narrows toward the first direction side in the axial direction, and at the same time, the end surface on the first direction side in the axial direction is a flat surface. The recess 11 has a predetermined depth D on the first direction side in the axial direction (see Figs. 4A and 7A). In the present embodiment, the recess 11 is formed by deep drawing, and the position of an end surface P1 on the first direction side in the axial direction is the same in the plurality of recesses 11. That is, the position of the end surface P1 of the recess 11 on the first direction side in the axial direction is on one plane perpendicular to the axial direction. Note that the inertia ring is fastened to the recess 11 as described later, but the cover plate 10 may include a recess (not illustrated) to which the inertia ring is not fastened. In this case, the position of the end surface of the recess (not illustrated) may be the same as or different from that of the end surface P1 of the recess 11 on the first direction side in the axial direction.

Each of the plurality of recesses 11 includes an inertia ring fastening portion 11a that is a fastening portion for fastening to an inertia ring (not illustrated). In the present embodiment, the inertia ring fastening portion 11a is a circular through-hole penetrating the cover plate 10 in the axial direction. Here, in a case where the inertia ring fastening portion 11a has an application other than fastening to the inertia ring, for example, in a case where the inertia ring fastening portion 11a also functions as a positioning through-hole, the shape of the inertia ring fastening portion 11a may be a shape other than a circle, for example, an elliptical shape or an elongated hole shape. The inertia ring is an annular member that is coupled to the first rotating shaft and on which torque of the first rotating shaft acts. The inertia ring is a component for ensuring a predetermined moment of inertia, and the torque of the first rotating shaft acts on the inertia ring. Therefore, by fastening the inertia ring to the cover plate 10, the torque on the first rotating shaft side is transmitted to the cover plate 10 in a state of having a predetermined moment of inertia.

In the present embodiment, the inertia ring is an annular member, and has an annular flat surface with substantially the same inner diameter and outer diameter as the outer circumferential portion 10b of the cover plate 10. In the present embodiment, fastening is performed in a state where the annular flat surface included in the inertia ring is in contact with the end surface of the recess 11 on the first direction side in the axial direction. That is, a screw hole is formed in the inertia ring at a position corresponding to the inertia ring fastening portion 11a in the circumferential direction and the radial direction, and a fastening member is inserted into the inertia ring fastening portion 11a formed in each of the plurality of recesses 11, and the inertia ring is fastened. Note that, in the present embodiment, the fastening member that fastens the inertia ring to the cover plate 10 in the inertia ring fastening portion 11a is a bolt.

### (3) Configuration of Support Plate:

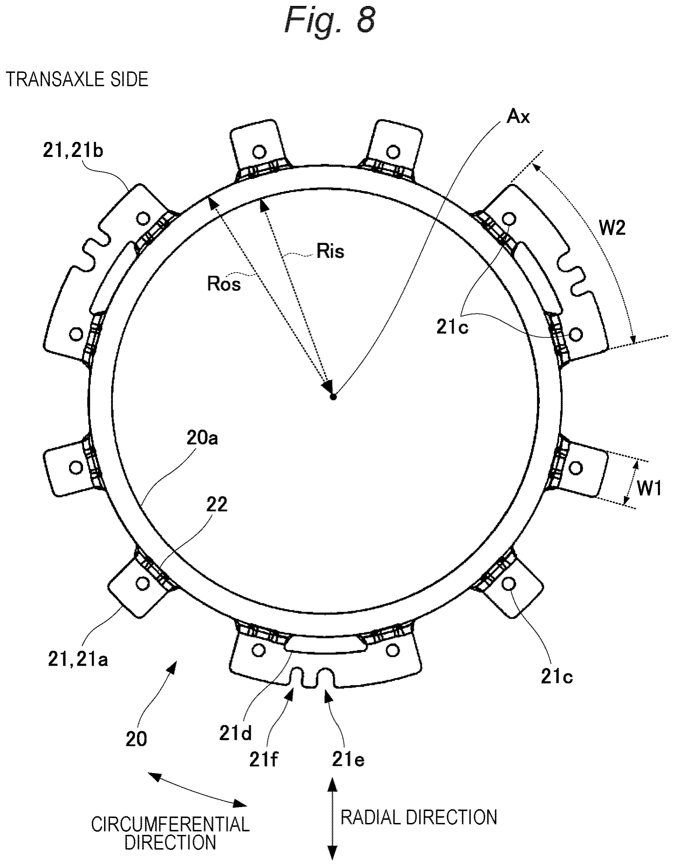

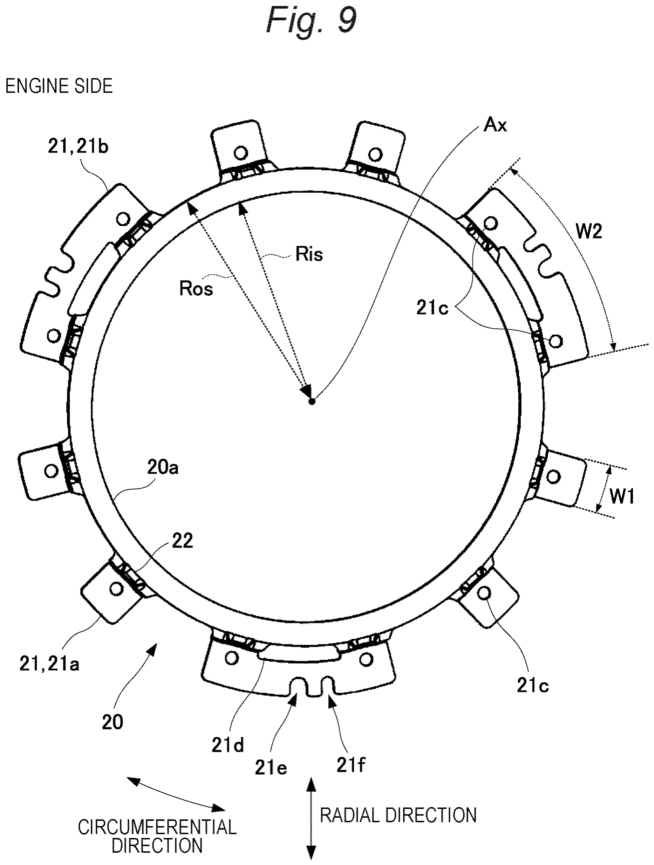

The support plate 20 is an annular member fastened to the cover plate 10. Figs. 8, 9, and 7B are diagrams illustrating the support plate 20. Fig. 8 is a diagram of the support plate 20 taken out from the torque fluctuation absorbing apparatus 1 and viewed along the axial direction from the transaxle side. Fig. 9 is a diagram of the support plate 20 taken out from the torque fluctuation absorbing apparatus 1 and viewed along the axial direction from the engine side. Fig. 7B is a perspective view of the support plate 20 as viewed from the transaxle side.

The support plate 20 is a member formed by forming a plate-like member into an annular shape, and the plate thickness direction is directed in the axial direction in most portions of the support plate 20. The support plate 20 is a member fastened to the cover plate 10, and includes an annular main body portion 20a and an extending portion 21 extending radially outward from the outer circumference of the main body portion 20a, and the plane to which the main body portion 20a belongs is at a position shifted to the first direction side in the axial direction from the plane to which the extending portion 21 belongs. That is, the main body portion 20a is on the first direction side with respect to the extending portion 21.

In the present embodiment, the inner diameter Ris of the main body portion 20a is larger than the inner diameter Ric of the inner circumferential portion 10a of the cover plate 10. The outer diameter Ros of the main body portion 20a is substantially the same as the outer diameter Roc of the inner circumferential portion 10a of the cover plate 10. The extending portion 21 is a portion extending radially outward from the outer circumference of the main body portion 20a, but in the present embodiment, there is a wall surface portion 22 extending axially from the outer circumference of the main body portion 20a (see Fig. 7B), and the extending portion 21 extends radially outward from the axial end portion of the wall surface portion 22.

The extending portion 21 is a plate-like portion having a flat surface directed in a direction perpendicular to the axial direction, and a plurality of extending portions are discretely formed in the circumferential direction. The circumferential width of the extending portion 21 is adjusted in a manner that the extending portion 21 fits between the recesses 11 of the cover plate 10. Specifically, in the cover plate 10, since the recess 11 is formed at the predetermined depth D on the first direction side in the axial direction, a housing portion 11b in which the extending portion 21 can be disposed on the first direction side in the axial direction from the outer circumferential portion 10b is formed between the recesses 11 in the circumferential direction (see Fig. 7A).

Since the circumferential width of the extending portion 21 is smaller than the circumferential width of the housing portion 11b, the extending portion 21 is disposed in the housing portion 11b between the recesses 11, and at the same time, the inner circumferential portion 10a and the main body portion 20a face each other and the cover plate 10 and the support plate 20 can be overlapped with each other as illustrated in, for example, Figs. 1, 2, 3A, and 3B.

Note that, in the present embodiment, the extending portion 21 has two types of shapes. Here, one is referred to as "first extending portion 21a", and the other is referred to as "second extending portion 21b". The first extending portion 21a is smaller than the second extending portion 21b, and the circumferential width W1 of the first extending portion 21a is smaller than the circumferential width W2 of the second extending portion 21b. There are two types of circumferential distances between the recesses 11 formed in the cover plate 10 according to the present embodiment, namely, the distance L1 and the distance L2. In the present embodiment, the first extending portion 21a is disposed between the recesses 11 whose distance is the distance L1, and the second extending portion 21b is disposed between the recesses 11 whose distance is the distance L2.

In each of the extending portions 21, the circumferential width is substantially constant. The radially outer end portion of the extending portion 21 substantially matches the radially outer end portion of the cover plate 10. That is, when comparing the entire cover plate 10 with the entire support plate 20, the sizes of the outer diameters are substantially the same.

Each of the plurality of extending portions 21 includes a cover plate fastening portion 21c that is a fastening portion for fastening the cover plate 10 to the support plate 20. In the present embodiment, the cover plate fastening portion 21c is a circular through-hole penetrating the support plate 20 in the axial direction. In the present embodiment, one cover plate fastening portion 21c is formed at a substantially central portion in the circumferential direction of the first extending portion 21a, and two cover plate fastening portions 21c are respectively formed at portions closer to both ends than the center in the circumferential direction of the second extending portion 21b.

On the other hand, a support plate fastening portion 11c, which is a fastening portion for fastening to the support plate 20, is formed between the recesses 11 in the circumferential direction on the outer circumferential portion 10b of the cover plate 10. In the present embodiment, the support plate fastening portion 11c is a circular through-hole penetrating the cover plate 10 in the axial direction. In the present embodiment, one support plate fastening portion 11c is formed at a substantially central portion in the circumferential direction of the portion with the distance between the recesses 11 being the distance L1, and two support plate fastening portions 11c are respectively formed at portions closer to both ends than the center in the circumferential direction of the portion with the distance between the recesses 11 being the distance L2.

In a state where the cover plate 10 and the support plate 20 are in contact with each other in the axial direction, the cover plate fastening portion 21c and the support plate fastening portion 11c are formed at the same position in the circumferential direction and the radial direction. Therefore, an inter-plate fastening member 30 is inserted into and fastened to the cover plate fastening portion 21c and the support plate fastening portion 11c, so that the cover plate 10 and the support plate 20 can be fastened to each other. Note that, in the present embodiment, the inter-plate fastening member 30 is a rivet (see Figs. 1, 2, 3A, and 3B). When the support plate 20 and the cover plate 10 are fastened to each other, torque is transmitted from the first rotating shaft to the support plate 20 and the cover plate 10 via the inertia ring.

In the present embodiment, the cover plate 10 and the support plate 20 sandwich the intermediate plate 2g that is a member extending from the damper portion via a sliding member and a biasing member. Specifically, as illustrated in Fig. 4A, an annular disc spring 40 as a biasing member, a pressure plate 50 that causes an axial biasing force generated by the disc spring 40 to act on a sliding member 60, and the sliding member 60 are arranged between the cover plate 10 and the support plate 20. The sliding member 60 is an annular member and is a member for generating a predetermined friction coefficient in a state where the biasing force of the disc spring 40 acts. The intermediate plate 2g extending in the radial direction from the damper portion 2 is sandwiched between the two sliding members 60. One of the sliding members 60 abuts on the cover plate 10, and the other of the sliding members 60 abuts on the pressure plate 50. The disc spring 40 is disposed between the pressure plate 50 and the support plate 20.

With the above configuration, the biasing force of the disc spring 40 acts on the sliding member 60 via the pressure plate 50. The friction coefficient between the sliding member 60 and the intermediate plate 2g is set in a manner that the sliding member 60 and the intermediate plate 2g do not slide until the torque fluctuation between the first rotating shaft and the second rotating shaft reaches a predetermined value, and when the torque fluctuation reaches the predetermined value, the sliding member 60 and the intermediate plate 2g slide against each other. Therefore, the torque limiter portion 3 functions as a device that limits the torque transmitted between the first rotating shaft and the second rotating shaft.

In the above configuration, the inertia ring is fastened to the cover plate 10 in a state where the cover plate 10 and the support plate 20 are fastened to each other. In this manner, in a state where the inertia ring, the cover plate 10, and the support plate 20 are fastened to each other, the extending portion 21 of the support plate 20 is present between the plurality of recesses 11 of the cover plate 10. That is, the extending portion 21 is housed in the housing portion 11b formed between the plurality of recesses 11, and the extending portion 21 and the inertia ring hardly interfere with each other in the axial direction. According to this configuration, the shapes of the cover plate 10 and the inertia ring can be changed without changing the shape of the support plate 20.

For example, the moment of inertia required varies depending on the vehicle type, and thus the size of the diameter of the inertia ring may be adjusted so as to have a weight corresponding to each moment of inertia. When the size of the diameter of the inertia ring is adjusted, the radial position of the screw hole of the inertia ring is also adjusted, the position of the inertia ring fastening portion 11a corresponding to the position of the screw hole is also adjusted, and as a result, the size of the diameter of the cover plate 10 may also be adjusted. Even if the size of the diameter of the cover plate 10 is adjusted in this manner, if the position of the support plate fastening portion 11c is set to the same position in the cover plate 10, fastening can be performed by the cover plate fastening portion 21c of the support plate 20, so that it is not necessary to change the size and shape of the diameter of the support plate 20. Therefore, it is possible to cope with the design change of the inertia ring only by changing the shape of the cover plate among the components of the torque fluctuation absorbing apparatus, and it is possible to provide the torque fluctuation absorbing apparatus that can be easily used for a plurality of targets.

In a case where the design of the inertia ring is changed, it is not necessary to change the design of the support plate 20, and thus, it is not necessary to change the design of other components. For example, it is not necessary to change the design of the side plates 2e and 2f. Therefore, the member cost can be suppressed by separating the support plate 20 and the other member from the single member by pressing. Here, the other member is only required to be a member that has an outer diameter smaller than the inner diameter of the support plate 20, is made of the same material as the support plate 20, and has substantially the same thickness in the axial direction. In the present embodiment, examples of such a member include one of the side plates 2e and 2f described above. For example, the support plate 20 and the side plate 2e can be co-molded from the single member.

Furthermore, the cover plate 10 according to the present embodiment includes the plurality of recesses 11, and wall surfaces 11d are formed at both circumferential ends and on the radially inner side of the recesses 11 (see Fig. 7A). For this reason, the rigidity of the entire cover plate 10 is higher than that of a configuration in which the wall surface 11d is not formed. Moreover, in the present embodiment, since the end surface of the recess 11 on the first direction side is in contact with the inertia ring, a large gap is formed between the inertia ring and the cover plate 10 as compared with the configuration in which the cover plate 10 is substantially planar. As a result, even if water enters the inside of the torque fluctuation absorbing apparatus 1, it is possible to easily discharge the water to the outside of the torque fluctuation absorbing apparatus 1 by centrifugal force or the like due to the rotation during the usage process.

Furthermore, in the present embodiment, by adjusting the distance between the end surface of the extending portion 21 on the first direction side in the axial direction and the end surface of the recess 11 on the first direction side in the axial direction, it is not necessary to provide a notch or the like for preventing interference with the fastening member in the inertia ring.

Specifically, as illustrated in Fig. 3B, the distance L3 between the end surface of the extending portion 21 on the first direction side in the axial direction (engine side) and the end surface of the recess 11 on the first direction side in the axial direction is larger than the axial distance of a head portion 30a of the inter-plate fastening member 30 inserted into the cover plate fastening portion 21c. Therefore, the head portion 30a does not protrude further toward the first direction side in the axial direction than the end surface of the recess 11. In a state where the inertia ring is fastened to the end surface of the recess 11 on the first direction side in the axial direction, the head portion 30a does not come into contact with the inertia ring. As a result, it is not necessary to provide a notch on the inertia ring side to prevent interference with the head portion 30a.

As compared with the configuration in which a notch is provided in the inertia ring in order to prevent interference with the head portion 30a, in the present embodiment in which the notch is unnecessary, the weight of the inertia ring can be easily ensured. Therefore, it is less necessary to increase the diameter of the inertia ring, and the torque fluctuation absorbing apparatus 1 can be made compact. Furthermore, the presence of the notch in the inertia ring may cause fracture due to stress concentration. However, in the case of the configuration in which the notch is unnecessary as in the present embodiment, the possibility of fracture due to stress concentration is reduced, and thus, the possibility that a product satisfying the requirement can be manufactured even if the material is downgraded is increased.

Furthermore, in the present embodiment, the diameter Lc1 of the cover plate 10 is equal to or larger than the diameter Ls1 of the support plate 20. Specifically, as illustrated in Fig. 2, the diameter of the support plate 20 is the distance Ls1 between the rotation axis Ax and the outer circumferential portion of the extending portion 21. The diameter Lc1 of the cover plate is equal to or larger than the diameter Ls1 of the support plate 20. That is, the diameter of the cover plate 10 may become larger than the diameter Lc1 illustrated in Fig. 2 with the design change of the inertia ring, but the diameter Ls1 of the support plate 20 does not change. For this reason, the diameter Lc1 of the cover plate 10 is equal to or larger than the diameter Ls1 of the support plate 20. According to such a configuration, while the position of the support plate fastening portion 11c in the cover plate 10 is not changed and the shape of the recess 11 is maintained, for example, a design change can be made such that the diameter of the cover plate 10 is increased with a shape change of extending the flat surface and the wall surface radially outward, a design change can be made such that the drawing depth of the recess 11 is changed, and the like. Note that, if the inertia ring fastening portion 11a, the wall surface 11d, and the support plate fastening portion 11c are not cracked even if the shape of the recess 11 is changed, the flat surface of the recess 11 may be changed to be widened in the circumferential direction when the diameter of the cover plate 10 is increased. According to the above configuration, it is possible to implement a configuration in which even if the design of the cover plate 10 is changed with the design change of the inertia ring, the design of the support plate 20 does not need to be changed.

Furthermore, as illustrated in Fig. 2, in the present embodiment, the distance Lc2 from the rotation axis Ax to the innermost circumferential portion of the inertia ring fastening portion 11a is smaller than the distance Ls2 from the rotation axis Ax to the outermost circumferential portion of the cover plate fastening portion 21c. That is, in the present embodiment, the inertia ring fastening portion 11a is present in the recess 11, and the cover plate fastening portion 21c is present in the extending portion 21. Since the recess 11 and the extending portion 21 are at different positions in the circumferential direction, the inertia ring fastening portion 11a and the cover plate fastening portion 21c are also at different positions in the circumferential direction.

The inertia ring fastening portion 11a and the cover plate fastening portion 21c can thus be arranged to overlap each other in the radial direction. In a case where it is necessary to arrange the inertia ring fastening portion 11a and the cover plate fastening portion 21c so as not to overlap each other in the radial direction, it is necessary to arrange the inertia ring fastening portion and the cover plate fastening portion so as to be sufficiently separated from each other in the radial direction, and thus the size of the torque fluctuation absorbing apparatus 1 in the radial direction increases. However, according to the present embodiment, since the inertia ring fastening portion 11a and the cover plate fastening portion 21c can be arranged to overlap each other in the radial direction, the torque fluctuation absorbing apparatus 1 can be made compact.

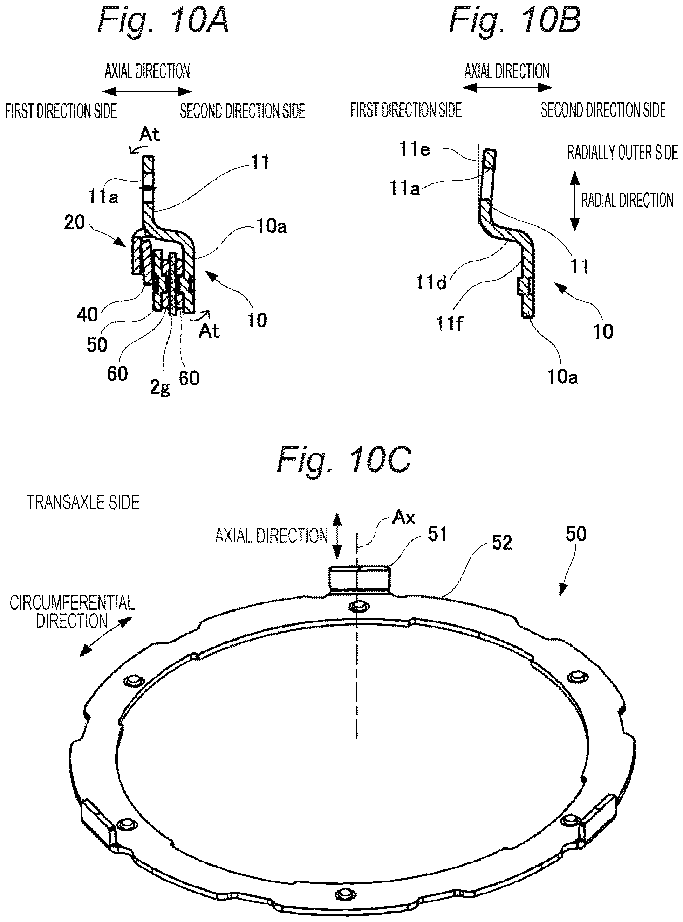

Furthermore, the components of the torque fluctuation absorbing apparatus 1 may be configured to be assembled after deformation in view of deformation at the time of assembly. Fig. 10A is a diagram in which a part of the cross-sectional view in Fig. 4A is extracted. In the present embodiment, the disc spring 40, the pressure plate 50, the sliding member 60, and the intermediate plate 2g are sandwiched between the cover plate 10 and the support plate 20. The disc spring 40 causes a biasing force to act on the sliding member 60 via the pressure plate 50. Therefore, the biasing force of the disc spring 40 acts as a force to rotate the cover plate 10 in the counterclockwise direction as indicated by an arrow At in Fig. 10A.

Therefore, the state of the cover plate 10 illustrated in Fig. 10A is a state after deformation by the biasing force of the disc spring 40. In the present embodiment, the shape of the cover plate 10 is designed so as to be in the state illustrated in Fig. 10A after deformation in view of the deformation by the biasing force of the disc spring 40. Specifically, the cover plate 10 is configured such that the end surface of the recess on the first direction side in the axial direction is on the second direction side in the axial direction as it goes from the radially inner side to the radially outer side in a state where the fastening to the support plate 20 is released.

Fig. 10B is a diagram illustrating the cover plate 10 in a state where fastening to the support plate 20 is released in a cross-section similar to Fig. 10A. As illustrated in Fig. 10B, the shape of the cover plate 10 in a state where the fastening to the support plate 20 is released is different from the shape after being fastened to the support plate 20.

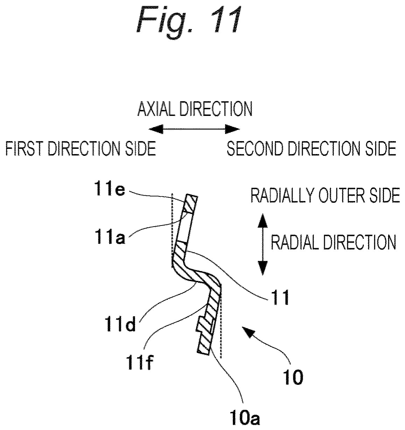

Specifically, except for the wall surface 11d and the end surface 11f between the inner circumferential portion 10a and the recess 11, the end surface 11e of the recess on the first direction side in the axial direction is on the second direction side in the axial direction as it goes from the radially inner side to the radially outer side. That is, it is configured in a state of being rotated in the opposite direction to the arrow At illustrated in Fig. 10A. Note that, in the present embodiment, the configuration in which the end surface 11e is on the second direction side in the axial direction as it goes from the radially inner side to the radially outer side is applied. However, similarly to the end surface 11e, the end surface 11f may be on the second direction side in the axial direction as it goes from the radially inner side to the radially outer side (see Fig. 11).

Furthermore, in the cover plate 10, the position of the inertia ring fastening portion 11a is also formed to match the fastening portion on the inertia ring side after deformation. That is, when the cover plate 10 is fastened to the support plate 20, the position of the inertia ring fastening portion 11a slightly changes radially inward. In the present embodiment, in view of the deformation, the position of the inertia ring fastening portion 11a before deformation illustrated in Fig. 10B is on the radially outer side than the position of the inertia ring fastening portion 11a after deformation illustrated in Fig. 10A. This configuration is an example, and the shape of the inertia ring fastening portion 11a may be a shape that covers the positions of the inertia ring fastening portion 11a before and after deformation. For example, an elongated hole shape that connects two circular holes may be used. In a case where a positioning hole, a so-called knock pin hole, is provided in the end surface of the recess 11, the hole may be similarly disposed on the radially outer side or may have a similar shape covering the positions before and after deformation.

According to the above configuration, in a state where the cover plate 10 and the support plate 20 are fastened to each other, the end surface 11e of the recess 11 of cover plate 10 on the first direction side faces the direction perpendicular to the axial direction (broken line illustrated in Fig. 10B), and abuts on the flat surface of the inertia ring without any gap therebetween. The position of the inertia ring fastening portion 11a matches the position of the fastening portion on the inertia ring side. Therefore, the cover plate 10 and the inertia ring can be easily fastened to each other.

Furthermore, in the torque fluctuation absorbing apparatus 1 according to the present embodiment, a positioning portion for performing positioning in the manufacturing process is formed in the cover plate 10 and the support plate 20. That is, in the manufacturing process of the torque fluctuation absorbing apparatus 1, the cover plate 10 and the support plate 20 face each other in a manner that the position of the support plate fastening portion 11c matches the position of the cover plate fastening portion 21c, and both are fastened to each other by the inter-plate fastening member 30.

In order to perform such a fastening step, it is necessary to position the cover plate 10 and the support plate 20 in a manner that the position of the support plate fastening portion 11c matches the position of the cover plate fastening portion 21c. In the present embodiment, the positioning portion for performing such positioning is formed in the cover plate 10 and the support plate 20.

Specifically, as illustrated in Figs. 5, 6, and 7A, an engagement hole 11g for engaging with the pressure plate 50 is formed in the inner circumferential portion 10a of the cover plate 10. The engagement hole 11g is a substantially rectangular through-hole penetrating in the axial direction. In the present embodiment, the engagement hole 11g is formed in a radially outer portion of the inner circumferential portion 10a, and the positions of the engagement holes 11g are at equal intervals in the circumferential direction. In the present embodiment, the engagement hole 11g is formed at three locations on the inner circumferential portion 10a.

The engagement hole 11g is substantially at the center between the adjacent recesses 11 in the circumferential direction. The circumferential distance L2 between the recesses 11 sandwiching the engagement hole 11g is longer than the circumferential distance L1 between the recesses 11 not sandwiching the engagement hole 11g. That is, the engagement hole 11g is formed in the inner circumferential portion 10a in the radially inner portion of the region where the circumferential distance is long out of the regions formed between the recesses 11 in the outer circumferential portion 10b.

The engagement hole 11g is a hole to be engaged with an engagement portion 51 formed in the pressure plate 50. Fig. 10C is a perspective view of the pressure plate 50 as viewed from the transaxle side. The pressure plate 50 is a member that receives the biasing force of the disc spring 40 and transmits the biasing force to the sliding member 60, and includes an annular main body portion 52 and the engagement portion 51. The main body portion 52 has a plate-like annular shape, and the plate thickness direction thereof is directed in the axial direction. The engagement portion 51 is a substantially rectangular plate-like portion extending in the axial direction from three locations on the outer circumference of the main body portion 52. The engagement portion 51 engages with the engagement hole 11g to prevent the cover plate 10 and the pressure plate 50 from relatively rotating in the circumferential direction around the rotation axis Ax.

In the outer circumferential portion 10b of the cover plate 10 between the recesses 11 sandwiching the engagement hole 11g in the circumferential direction, positioning portions 11h and 11i are formed on the radially outer side of the engagement hole 11g. In the present embodiment, the positioning portions 11h and 11i are notches penetrating in the axial direction. That is, the radially inner shape of each of the positioning portions 11h and 11i is an arc shape, and on the radially outer side, the penetrating state extends to the outermost circumferential portion of the cover plate 10, thereby forming a notch. Note that in the present embodiment, the circumferential width of the positioning portion 11i is larger than that of the positioning portion 11h.

When the cover plate 10 and the support plate 20 face each other, the second extending portion 21b is disposed at a position corresponding to the position where the engagement hole 11g is present in the circumferential direction. That is, the extending portion 21 that is present between the recesses 11 sandwiching the engagement hole 11g in the circumferential direction is the second extending portion 21b. In the second extending portion 21b, a window portion 21d that is a hole penetrating in the axial direction is formed at a position overlapping the engagement hole 11g in the radial direction and the circumferential direction (see Figs. 7B, 8, and 9).

Specifically, the wall surface portion 22 between the second extending portion 21b and the main body portion 20a is located at both ends in the circumferential direction, is not present at the center in the circumferential direction, and a portion in which the wall surface portion 22 is not present is the window portion 21d. Note that the second extending portion 21b can also be regarded as a structure formed by arranging the first extending portions 21a extending from the main body portion 20a at equal intervals in the circumferential direction and coupling the adjacent first extending portions 21a in the circumferential direction at three locations at equal intervals in the circumferential direction.

The second extending portion 21b includes positioning portions 21e and 21f on the radially outer side of the window portion 21d. In the present embodiment, the positioning portions 21e and 21f are notches penetrating in the axial direction. That is, the radially inner shape of each of the positioning portions 21e and 21f is an arc shape, and on the radially outer side, the penetrating state extends to the outermost circumferential portion of the cover plate 10, thereby forming a notch. Note that in the present embodiment, the circumferential width of the positioning portion 21e is larger than that of the positioning portion 21f.

In the above configuration, the positioning portion 21e and the positioning portion 11i are at the same position in the radial direction and the circumferential direction, and the positioning portion 21f and the positioning portion 11h are at the same position in the radial direction and the circumferential direction. Therefore, by inserting a pin or the like into each positioning portion, the cover plate 10 and the support plate 20 can be positioned in the radial direction and the circumferential direction. In the present embodiment, the positioning portions 11h, 11i, 21e, and 21f are used for positioning at the time of conveyance and positioning at the time of fastening.

Specifically, the positioning portions 11i and 21e are used when the torque fluctuation absorbing apparatus 1 is conveyed in a temporarily assembled state. That is, when the cover plate 10, the support plate 20, and the plurality of members including the members between the plates are temporarily assembled, the temporarily assembled torque fluctuation absorbing apparatus 1 is conveyed to a work area where the fastening step is performed. Conveyance is performed in a state where the temporarily assembled torque fluctuation absorbing apparatus 1 is held by a conveyance device. When the conveyance device holds the torque fluctuation absorbing apparatus 1, conveyance is performed in a state where pins are inserted into the positioning portions 11i and 21e. According to this configuration, conveyance can be performed in a state where the cover plate 10 and the support plate 20 are not separated in the circumferential direction and the radial direction.

In the work area of the fastening step, fastening is performed using the inter-plate fastening member 30 in a state where the cover plate 10 and the support plate 20 are placed in the work area. At this time, the cover plate 10 and the support plate 20 need to be positioned in the radial direction and the circumferential direction. Therefore, in the present embodiment, pins are provided at positions corresponding to the positioning portions 11h and 21f in the work area, and the torque fluctuation absorbing apparatus 1 temporarily assembled in the work area is set in a manner that the pins are inserted into the positioning portions 11h and 21f. According to this configuration, the fastening step can be performed in a state where the cover plate 10 and the support plate 20 are positioned in the circumferential direction and the radial direction. According to the above configuration, the fastening step can be performed in a state where the positions of the cover plate 10 and the support plate 20 are accurately positioned in the temporarily assembled torque fluctuation absorbing apparatus 1.

Note that, in the cover plate 10, the region where the positioning portions 11h and 11i are formed is a region between the recesses 11 sandwiching the engagement hole 11g in the circumferential direction. Therefore, the positioning portions 11h and 11i can be formed in a region wider in the circumferential direction than the housing portion 11b that houses the first extending portion 21a. The second extending portion 21b in which the positioning portions 21e and 21f are formed is longer than the first extending portion 21a in the circumferential direction. The sufficient space for forming the positioning portions 21e and 21f can thus be ensured. According to this configuration, the positioning portions 11h, 11i, 21e, and 21f can be formed at positions not interfering with the support plate fastening portion 11c and the cover plate fastening portion 21c for inserting the inter-plate fastening member 30.

Furthermore, in the present embodiment, the positioning portions 11h and 11i are on the radially outer side of the engagement hole 11g, the positioning portions 21e and 21f are on the radially outer side of the window portion 21d, and the support plate fastening portion 11c and the cover plate fastening portion 21c are at positions different from the positioning portions 11h, 11i, 21e, and 21f, the engagement hole 11g, and the window portion 21d in the circumferential direction. Therefore, it is not necessary to excessively bring the support plate fastening portion 11c and the cover plate fastening portion 21c, which are through-holes, and the positioning portions 11h, 11i, 21e, and 21f, which are penetrating notches, close to each other. For this reason, for example, as compared with the configuration in which the positioning portion is provided in the first extending portion 21a, it is possible to reduce the possibility that the support plate fastening portion 11c and the cover plate fastening portion 21c are broken due to the positioning portions 11h, 11i, 21e, and 21f.

### (4) Other Embodiments:

The above embodiment is an example for carrying out the present disclosure, and various other embodiments can be adopted. For example, the shape, size, and number of individual components are not limited. For example, the shape, size, and number of the recesses 11 in the cover plate 10, and the shape, size, and number of the extending portions 21 in the support plate 20 are not limited to the same configurations as those in the embodiment described above, and various configurations can be adopted.

The number of the positioning portions 11h, 11i, 21e, and 21f is not limited to the configuration in which two positioning portions are formed at each of three locations of the cover plate 10 and the support plate 20. For example, one positioning portion may be formed on the radially outer side of each of the three engagement holes 11g in the cover plate 10, or more positioning portions may be formed. The positioning portion may be formed at some of the three engagement holes 11g, for example, at two locations. Furthermore, a component before assembly is deformed by the biasing force acting thereon and thus has an appropriate shape at the time of assembly in view of deformation due to the biasing force of the disc spring 40. Such a component is not limited to the cover plate 10. For example, the shape of the support plate 20 in an unfastened state may be adjusted in a manner that the support plate 20 has an appropriate shape at the time of assembling after the shape change. In addition, the shapes and the like of various members may be changed.

The cover plate is only required to be an annular member fastened to the inertia ring connected to the first rotating shaft. That is, it is only required to be configured in a manner that the torque of the first rotating shaft is transmitted to the cover plate via the inertia ring by the cover plate being fastened to the inertia ring. The first rotating shaft is only required to be a member that rotates about the rotation axis and transmits torque to the inertia ring and the cover plate. The device to which the first rotating shaft is connected may be any device, and is not limited to the engine as in the embodiment described above, and various rotation drive devices such as a transaxle, a transmission, and a rotating electrical machine may be connected to the first rotating shaft.

The inertia ring is only required to be a component that ensures the moment of inertia, and may have a shape, size, weight, or material for ensuring the moment of inertia required for each target to which the torque fluctuation absorbing apparatus is applied. It is only required that the cover plate has an annular shape. That is, it is only required that a circular hole is formed on the radially inner side of the cover plate, and the outer circumference is circular. Here, there is no restriction that the inner circumference and the outer circumference are strictly circular, and various shapes and structures may be formed on the inner circumference and the outer circumference.

The support plate is only required to be an annular member fastened to the cover plate. That is, it is only required to be configured in a manner that the torque of the first rotating shaft is transmitted to the support plate via the inertia ring and the cover plate by the support plate being fastened to the cover plate. It is only required that the support plate has an annular shape. That is, it is only required that a circular hole is formed on the radially inner side of the support plate, and the outer circumference is circular. Here, there is no restriction that the inner circumference and the outer circumference are strictly circular, and various shapes and structures may be formed on the inner circumference and the outer circumference.

The inter-plate fastening member is only required to be a member used for fastening the cover plate and the support plate, and is not limited to the rivet described above. For example, the inter-plate fastening member may be a screw, a bolt, or the like.

The damper portion is only required to be a mechanism connected to the second rotating shaft. That is, the damper portion is only required to be a mechanism that can rotate in conjunction with the second rotating shaft and absorbs a difference in torque between the first rotating shaft and the second rotating shaft. In the embodiment described above, the damper portion is a mechanism having a coil spring, but is not limited to such a mechanism, and may be configured using various elastic bodies. The number of elastic bodies is not limited, and various modes may be adopted.

It is only required that the torque limiter portion has a function of sandwiching the member extending from the damper portion between the cover plate and the support plate via the sliding member and the biasing member, and of allowing slippage when torque fluctuations between the first rotating shaft and the second rotating shaft reach a predetermined value. That is, the torque limiter portion enables torque transmission between the torque limiter portion and the damper portion by frictional force, but the sliding member slides when torque fluctuations between the first rotating shaft and the second rotating shaft reach a predetermined value. As a result, it is only required to be configured in a manner that the torque fluctuations between the first rotating shaft and the second rotating shaft are limited.

The sliding member is only required to be a member that causes frictional force to act on the member extending from the damper portion, and the material and shape thereof are not limited. However, the sliding member preferably has an annular shape so that the frictional force can act on the entire circumference around the rotation axis. The biasing member is only required to be a member that causes biasing force to act on the sliding member side between the cover plate and the support plate, and it is only required that the biasing member can cause the biasing force to act to bring the sliding member into contact with the member extending from the damper portion. For this reason, although the material and shape of the biasing member are not limited, it is preferable to use an annular disc spring so that the biasing force can act on the entire circumference around the rotation axis.

Furthermore, the recess included in the cover plate is only required to be a recess with a predetermined depth on the first direction side in the axial direction and including an inertia ring fastening portion that is a fastening portion for fastening to the inertia ring, and to be a portion disposed discretely in the circumferential direction. That is, the cover plate has an annular shape, but in the recess, has a predetermined depth on the first direction side in the axial direction. The portion other than the recess is only required to be a portion to which the extending portion of the support plate is fastened, and is formed of, for example, a plate-like portion without depth in the axial direction.

The first direction side in the axial direction is a direction in which the inertia ring is present in the axial direction. That is, in the plurality of recesses, the positions of the end surfaces on the first direction side in the axial direction are the same, and the inertia ring is fastened to the cover plate in a state where the end surfaces on the first direction side in the axial direction are in contact with the inertia ring. As described above, since the inertia ring is in contact with the recess at the same position on the first direction side in the axial direction, the contact surface is on the same plane.

The depth of the recess is not limited, but it is preferable that the extending portion be disposed between adjacent recesses and the depth be set to a depth at which the extending portion does not interfere with the inertia ring, that is, the depth of the recess in the axial direction be larger than the thickness of the extending portion. It is only required that the inertia ring fastening portion can fasten the inertia ring to the cover plate by the fastening member. Therefore, the inertia ring fastening portion may be formed by a hole, a screw hole, a notch, or the like.

Furthermore, the recesses are only required to be arranged discretely in the circumferential direction. That is, it is only required that a plurality of recesses are formed in a state of being separated by a predetermined distance in the circumferential direction. The distance between the recesses may or may not be constant. As the former, for example, a configuration in which the distance between some recesses is constant as a first distance and the distance between the remaining recesses is constant as a second distance can be adopted. Furthermore, the number of recesses is not limited. In any case, it is only required that by the recesses being arranged discretely in the circumferential direction, the space for attaching the extending portion is made. Furthermore, in the embodiment described above, the recess is obtained by deep drawing, but the method of forming the recess is not limited to deep drawing.

The support plate fastening portion is only required to be a portion formed in the cover plate and to be a fastening portion for fastening the support plate between the recesses in the circumferential direction. That is, it is only required that the support plate fastening portion can fasten the support plate to the cover plate by the inter-plate fastening member. Therefore, the support plate fastening portion may be formed by a hole, a screw hole, a notch, or the like.

The extending portion of the support plate is an extending portion extending radially outward from the outer circumference of the annular main body portion and disposed between the recesses in the circumferential direction, and is a portion in which the cover plate fastening portion, which is a fastening portion for fastening to the cover plate, is formed. That is, the support plate has at least the main body portion and the extending portion. It is only required that the main body portion of the support plate has an annular shape. That is, it is only required that a circular hole is formed on the radially inner side of the main body portion of the support plate, and the outer circumference other than the extending portion is circular. Here, there is no restriction that the inner circumference and the outer circumference are strictly circular, and various shapes and structures may be formed on the inner circumference and the outer circumference.

The extending portion is a portion extending radially outward from the main body portion and is disposed between the recesses. The shape and number of the extending portions are not limited. Therefore, the extending portion does not need to be formed in all the spaces between the recesses. The shapes of the plurality of extending portions may be different from each other. The extending portion may directly extend radially outward from the main body portion, or may have a wall surface extending from the main body portion in a direction other than the radial direction, for example, in the axial direction, and further extend radially outward from the wall surface. The cover plate fastening portion is only required to be a fastening portion for fastening to the cover plate. That is, it is only required that the cover plate fastening portion can fasten the cover plate to the support plate by the inter-plate fastening member. Therefore, the cover plate fastening portion may be formed by a hole, a screw hole, a notch, or the like. The number of the extending portions and the number and size of portions fastened by the inter-plate fastening member may be adjusted based on, for example, a fastening force required to fasten the cover plate to the support plate.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A torque fluctuation absorbing apparatus (1) comprising:
a cover plate (10) that has an annular shape and is fastened to an inertia ring connected to a first rotating shaft;
a support plate (20) that has an annular shape and is fastened to the cover plate (10);
an inter-plate fastening member (30) that is used to fasten the cover plate (10) and the support plate (20);
a damper portion (2) that is connected to a second rotating shaft; and
a torque limiter portion (3) that sandwiches a member extending from the damper portion (2) between the cover plate (10) and the support plate (20) via a sliding member (60) and a biasing member, and allows slippage when a torque fluctuation between the first rotating shaft and the second rotating shaft reaches a predetermined value, wherein
the cover plate (10) includes
a plurality of recesses (11) discretely arranged in a circumferential direction, each of which having a predetermined depth (D) on a first direction side in an axial direction and including an inertia ring fastening portion (11a) that is a fastening portion for fastening to the inertia ring, and
a support plate fastening portion (11c) that is a fastening portion for fastening to the support plate (20) between the recesses (11) in the circumferential direction,
the support plate (20) includes
an extending portion (21, 21a, 21b) that extends radially outward from an outer circumference of a main body portion (20a) with an annular shape, is disposed between the recesses (11) in the circumferential direction, and includes a cover plate fastening portion (21c) that is a fastening portion for fastening to the cover plate (10),
in a plurality of the recesses (11), positions of end surfaces (P1) on the first direction side in the axial direction are the same, and in a state where the end surfaces (P1) on the first direction side in the axial direction are in contact with the inertia ring, the inertia ring is fastened to the cover plate (10) by a fastening member at the inertia ring fastening portion (11a), and
the cover plate (10) and the support plate (20) are fastened by the inter-plate fastening member (30) at the support plate fastening portion (11c) and the cover plate fastening portion (21c).

2. The torque fluctuation absorbing apparatus (1) according to Claim 1, wherein a distance (L3) between an end surface of the extending portion (21) on the first direction side in an axial direction and an end surface of the recess (11) on the first direction side in the axial direction is larger than an axial distance of a head portion (30a) of the inter-plate fastening member (30) inserted into the cover plate fastening portion (21c).

3. The torque fluctuation absorbing apparatus (1) according to Claim 1 or 2, wherein a diameter (Lc1) of the cover plate (10) is equal to or larger than a diameter (Ls1) of the support plate (20).

4. The torque fluctuation absorbing apparatus (1) according to any one of Claims 1 to 3, wherein a distance (Lc2) from a rotation axis (Ax) to an innermost circumferential portion of the inertia ring fastening portion (11a) is smaller than a distance (Ls2) from the rotation axis (Ax) to an outermost circumferential portion of the cover plate fastening portion (21c).

5. The torque fluctuation absorbing apparatus (1) according to any one of Claims 1 to 4, wherein
in a state where fastening to the support plate (20) is released,
in an end surface of the cover plate (10) on the first direction side in an axial direction, at least an end surface (11e) of the recess (11) is on a second direction side in the axial direction toward a radially outer side from a radially inner side.

6. The torque fluctuation absorbing apparatus (1) according to any one of Claims 1 to 5, wherein
the torque limiter portion (3) includes
a disc spring (40) with an annular shape as the biasing member, and
a pressure plate (50) that causes biasing force in an axial direction generated by the disc spring (40) to act on the sliding member (60),
the pressure plate (50) includes
an engagement portion (51) that engages with the cover plate (10),
the cover plate (10) includes
an engagement hole (11g) that engages with the engagement portion (51),
the engagement hole (11g) is present between the recesses (11) adjacent to each other in a circumferential direction,
a circumferential distance (L2) between the recesses (11) sandwiching the engagement hole (11g) is longer than a circumferential distance (L1) between the recesses (11) not sandwiching the engagement hole (11g),
the extending portion (21, 21b) between the recesses (11) sandwiching the engagement hole (11g) is longer in the circumferential direction than the extending portion (21, 21a) between the recesses (11) not sandwiching the engagement hole (11g), and
a positioning portion (11h, 11i, 21e, 21f) that is a hole penetrating in the axial direction or a notch penetrating in the axial direction at a same position in a radial direction and the circumferential direction is formed in at least one location on the cover plate (10) and the extending portion (21, 21b) between the recesses (11) sandwiching the engagement hole (11g).

7. The torque fluctuation absorbing apparatus (1) according to Claim 6, wherein
a window portion (21d) that is a hole penetrating in an axial direction is formed at a position overlapping the engagement portion (51) in the radial direction and the circumferential direction in the extending portion (21, 21b) between the recesses (11) sandwiching the engagement hole (11g), the positioning portion (21e, 21f) is on a radially outer side of the window portion (21d), and the cover plate fastening portion (21c) is at a position different from the positioning portion (21e, 21f) and the window portion (21d) in the circumferential direction.
